# EUROPEAN PATENT APPLICATION

(11) **EP 4 813 903 A1**
(43) Date of publication of application: **30.09.2026**
(21) Application number: 26160329.4
(22) Date of filing: 24.02.2026
(51) Int. Cl.: B66F 9/075, B60L 58/24

(54) **LIFT TRUCK AND LIFT RECHARGING SYSTEM**

(30) Priority: 28.03.2025 IT 202500006657
(71) Applicant: Toyota Material Handling Manufacturing Italy S.p.A, 40132 Bologna (IT)
(72) Inventor: FOLIGNO, ANDREA, 40132 BOLOGNA (IT); BONSIGNORI, Andrea, 40132 BOLOGNA (IT)
(74) Representative: Casadei, Barbara

(57) **Abstract**

Described is a lift truck comprising a frame (2) housing an energy storage unit (3) consisting of a plurality of battery modules or packs, preferably in the form of a lithium battery or a battery with fuel cells, for powering a traction unit (4) and one or more auxiliary user devices (5);
a pin (6) for recharging the energy storage unit (3) is positioned in a portion of the frame (2) accessible from the outside;
characterised in that it comprises
a heat exchanger (7), in contact with at least part of the energy storage unit (3) or of the modules, having at least one pipe (8) for conveying an operating fluid having an inlet opening (9) and an outlet opening (10), positioned in a portion of the frame (2) accessible from the outside;
the inlet opening (9) and the outlet opening (10) are provided with coupling means (11) intended to form a hydraulic connection with a delivery branch (12) and a return branch (13) of a conditioning system (14) outside the lift truck (1).

## Description

The present invention relates to a lift truck and a lift truck recharging system.

In the last decade, the adoption of energy sources with lithium-ion technology has become more and more stablished than lead-acid batteries.

For this reason, more attention has been focused on implementing the performance of the lithium-ion battery not only in terms of life but also in terms of recharging speed, with a view to limiting machine downtimes. However, the rapid recharging phases of lithium batteries on mobile vehicles are often those that make a greater contribution of heat, with a consequent increase in the temperature of the cells and a possible risk of damage, with a consequent loss of energy retention capacity and further degradation of the cells themselves.

In or to overcome this problem, lift truck solutions have been proposed that provide a cooling system dedicated to the battery, for cooling the elements, installed directly in the machine.

By way of example, prior art systems use oil or water and glycol together with radiators, or air.

Recently, the structure of the lift truck has turned towards more compact solutions in which, inevitably, the spaces available for the battery are increasingly reduced.

The installation of a dedicated cooling system inside the machine results in a problem of space and efficiency, since the thermal energy is managed directly inside the truck.

Another important function for lithium-ion batteries is the heating of the modules to ensure a minimum operating temperature; cold environments or nighttime inactivity of the machines at particular times of the year lead to the cooling of the battery with problems of starting with and optimal or correct operation.

Generally, electrical resistors integrated into the modules are provided for heating the modules.

The management of the resistors is often integrated with the battery management.

In this context, the need has been felt to develop a solution that overcomes the heating problems derived from the rapid recharging of the battery and, at the same time, that keeps the dimensions of the truck compact, containing its cost.

Said object is fully achieved by a lift truck as set forth in independent claim 1 and by a lift truck recharging system as set forth in claim 7.

Further features of the invention are described in the accompanying dependent claims.

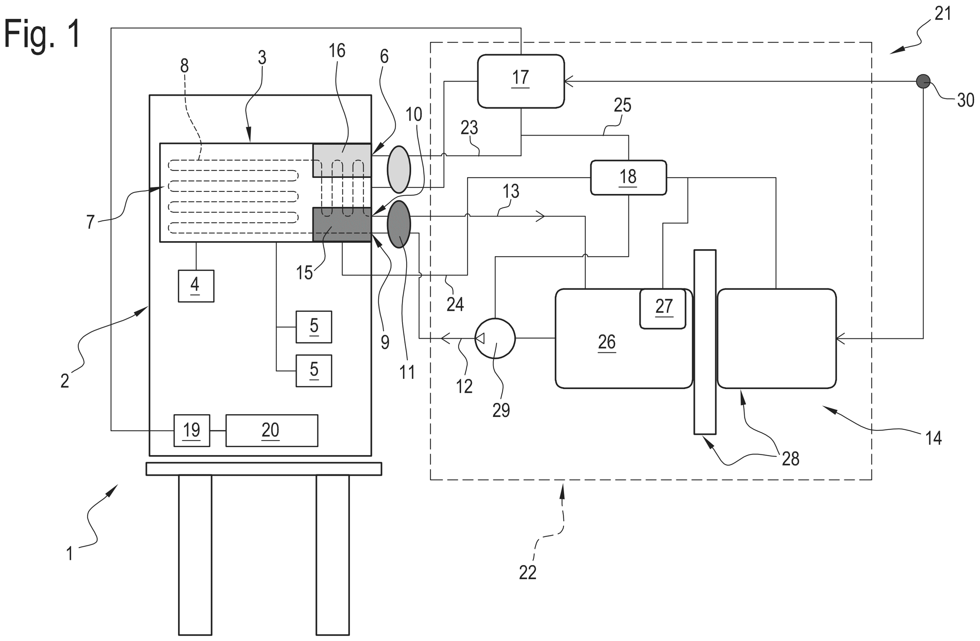

The advantages of the invention are more apparent in the non-limiting description which follows of a non-exclusive embodiment of a lift truck and a system for recharging the lift truck as schematically illustrated by way of example only and, therefore, without limiting the scope of the invention, in Figure 1.

The reference 1 denotes a lift truck according to this invention.

The lift truck 1 comprises a frame 2 housing an energy storage unit 3 consisting of a plurality of battery modules or packs, preferably in the form of a lithium battery or a battery with fuel cells.

The energy storage unit 3 is configured to power a traction unit 4 and one or more auxiliary user devices 5.

A pin 6 for recharging the energy storage unit 3 is positioned in a portion of the frame 2 accessible from the outside.

The charging pin 6 is positioned along one side or at the back of the lift truck 1.

The lift truck 1 comprises a heat exchanger 7, in contact with at least part of the energy storage unit 3 or of the battery modules/packs.

The contact is understood to mean a thermal contact.

According to alternative embodiments, the heat exchanger 7 can be in thermal contact at least partially also with other components inside the truck, such as, for example, an inverter, an oil pump that controls the lifting gear with any accessory parts, so that it supply and subtract heat as necessary also to these components as well as to the energy storage unit 3.

The heat exchanger 7 has at least one pipe 8 for conveying operating fluid having an inlet opening 9 and an outlet opening 10 are provided with coupling means 11 intended to form a hydraulic connection with a delivery branch 12 and a return branch 13 of a conditioning system 14 outside the lift truck.

The operating fluid is liquid such as, for example, oil or glycol.

The delivery branch 12 and the return branch 13 provide a respective connection pipe to the inlet opening 9 and the outlet opening 10.

The inlet opening 9 and the outlet opening 10 are positioned in a portion of the frame 2 accessible from the outside to facilitate the coupling operations of the delivery branch 12, of the return branch 13, of the conditioning system 14.

The inlet opening 9 and the outlet opening 10 of the heat exchanger 7 are positioned close to the recharging pin 6.

A detection system 15 is configured for detecting a hydraulic connection between the inlet opening 9 and the outlet opening 10 with the delivery branch 12 and the return branch 13 of the conditioning system 14.

The detection system 15 is configured for generating a warning signal 24 if the hydraulic connection is verified.

By way of example, the detection system 15 provides for the use of contact signals for closing an electrical circuit or a data connection, for example CAN.

Advantageously, the detection system 15 avoids moving the lift truck 1 forgetting the hydraulic connection of the delivery branch 12 and of the return branch 13.

The energy storage unit 3 comprises a system 16 for managing the flows of electric current inside the energy storage unit 3.

The management system 16 is also defined as BMS.

The management system 16 is configured to activate and mange the recharging operation of the energy storage unit 3.

The management system 16 is configured to communicate with a recharging unit 17 external to the lift truck 1.

For example, a coupling for data transmission between the management system 16 and the recharging unit 17 is via CAN BUS.

The management system 16 is configured to send command signals 23 to the recharging unit 17.

The management system 16 is configured to activate and mange the circulation of the operating fluid in the heat exchanger 7.

The management system 16 is configured to communicate with a control unit 18 of the conditioning system 14 external to the lift truck 1.

The management system 16 is configured for regulating the flow of energy inside the energy storage unit 3 in relation to a temperature value of the operating fluid of the heat exchanger 7.

The present invention is directed to a recharging system 21 of a lift truck 1 having one or more recharging stations 22 each intended for a lift truck 1. Each charging station 22 can be compatible with different types of lift trucks 1.

Each recharging station 22 comprises:
- the recharging unit 17 configured to be in communication with the management system 16 of the energy storage unit 3 and
- the conditioning system 14 comprising the delivery branch 12 and the return branch 13 of the operating fluid connectable to the inlet opening 9 and to the outlet opening 10 of the heat exchanger 7.

Advantageously, the recharging station provided with the conditioning system can serve several machines.

It should be noted that in the recharging station 22, the recharging unit 17 and the conditioning system 14 can be integrated into a single physical body or be physically separate although in information/data communication managed by a single controller.

The conditioning system 14 has the control unit 18 configured to activate the introduction of the operating fluid by means of the delivery branch 12 in the heat exchanger 7 of the lift truck 1 and to adjust the temperature of the operating fluid.

The conditioning system 14 can be preset to maintain a known constant temperature (for example 20 degrees) or the temperature can be preset as a function of the seasons, lower in the summer and higher in the winter. The preset temperature in the conditioning system 14 can be adjusted according to the various characteristics of the lift truck 1, its energy storage unit 3 and other parameters, such as type, capacity, internal temperature of the energy storage unit 3, chemistry, geometry and heat exchange capacity of the modules.

For example, the cooling of the energy storage unit 3 is required in the event of operational overheating or in the presence of rapid recharging that puts the energy storage unit 3 of the lift truck 1 under high stress. The conditioning system 14 comprises a function for maintaining the temperature of the operating fluid, that is, heating the operating fluid introduced into the heat exchanger 7 of the lift truck 1 if the external temperature drops below a threshold value.

Advantageously, during the night or at the weekend the energy storage unit 3 is not damaged by exposure to low temperatures, preventing it from freezing.

The recharging unit 17 is configured to activate the recharging of the energy storage unit 3 and to regulate the flows of electric recharging current in relation to the control signals 23 generated by the management system 16 of the energy storage unit 3.

The control signals 23 of the management system 16 provide for the activation and deactivation of the recharging unit 17, the regulation of the flow of electric current required by the energy storage unit 3.

The recharging unit 17 is configured to send command signals 25 to the control unit 18 of the conditioning system 14 on the basis of the command signals 23 received from the management system 16 of the energy storage unit 3.

In response to receiving the command signals 25 from the recharging unit 17, the control unit 18 is configured to adjust the temperature of the operating fluid in the delivery branch 12.

In this way the temperature of the operating fluid is mutually adjusted to have an optimised supply of electric current and minimise stress/damage to the energy storage unit 3.

The control unit 18 of the conditioning system 14 is configured to receive the warning signal 24 of the system 15 for detecting the hydraulic connection.

Upon receipt of the warning signal 24 from the system 15 for detecting the hydraulic connection, the control unit 18 generates a command to activate the introduction of the operating fluid by means of the delivery branch 12 into the heat exchanger 7.

In one embodiment, the conditioning system 14 provides a tank 26 for containing operating fluid, in which at least one temperature sensor 27 configured to communicate with the control unit 18 is provided.

The operating fluid contained in the tank 26 is heated or cooled by a conditioning device 28 suitable for acting as a reversible heat pump system.

The conditioning device 28 is controlled by the control unit 18 on the basis of the temperature values received from the temperature sensor and the control signals 25 received from the recharging unit 17.

The tank 26 is in fluid communication with the delivery branch 12.

A pump 29 is positioned along the delivery branch 12 to introduce the operating fluid from the tank 26 to the heat exchanger 7 of the lift truck 1. The pump 29 is controlled by the control unit 18.

The control unit 18 activates and deactivates the pump 29 on the basis of the warning signal 24 of the system 15 for detecting the hydraulic connection and the command signal 25 received from the recharging unit 17.

Advantageously, the recharging station provided with the conditioning system enables the installation of this system on the machine to be avoided, reducing the weight and space required for the conditioning.

In addition, the conditioning system enables the battery to be cooled during recharging and to reheat it in the event that, before use, the temperature is low, thus avoiding problems with energy delivery or energy absorption capacity during the braking.

The technical solution according to the present invention is also compatible in the presence of an onboard charger, AC-DC converter integrated in the lift truck 1.

Advantageously, since the conditioning system 14 is outside the lift truck 1, there is a saving in terms of the internal space available to the lift truck 1.

Advantageously, the presence of only the heat exchanger 7 inside the lift truck 1, in contact with at least the energy storage unit 3, improves the efficiency in terms of cooling.

A further advantage is given by the possible use of a single conditioning system 14 for various types of lift truck 1, with different internal characteristics, for example type, capacity, internal temperature of the energy storage unit 3, chemistry, geometry and heat exchange capacity of the modules.

With reference to each recharging station 22, the power grid 30 powers the recharging unit 17 and the conditioning device 28.

With reference to the recharging system 21, the possibility is provided that the operator can book a place at a recharging station 22 during the working shift of the lift truck 1.

The lift truck 1 comprises a data processing unit 19 in communication with one or more recharging units 17.

Display means 20 make available to an operator the information regarding the availability of respective recharging units 17.

The data processing unit 19 is configured to send a booking request to the recharging unit 17 shown as available.

The recharging unit 17 of a respective recharging station 22 is configured to receive a booking request from a lift truck 1 and to send an acceptance or refusal signal on the basis of its occupation and/or on the basis of the flow of electric recharging current requested from the unit of the energy storage unit 3 and the temperature of the operating fluid to be introduced in the heat exchanger 7.

## Claims

1. A lift truck comprising a frame (2) housing an energy storage unit (3) consisting of a plurality of battery modules or packs, preferably in the form of a lithium battery or a battery with fuel cells, for powering a traction unit (4) and one or more auxiliary user devices (5);
a pin (6) for recharging the energy storage unit (3) is positioned in a portion of the frame (2) accessible from the outside;
**characterised in that** it comprises
a heat exchanger (7), in contact with at least part of the energy storage unit (3) or of the modules, having at least one pipe (8) for conveying an operating fluid having an inlet opening (9) and an outlet opening (10), positioned in a portion of the frame (2) accessible from the outside;
the inlet opening (9) and the outlet opening (10) are provided with coupling means (11) intended to form a hydraulic connection with a delivery branch (12) and a return branch (13) of a conditioning system (14) outside the lift truck (1);
**characterised in that** it comprises a system (15) for detecting the hydraulic connection between the inlet opening (9) and the outlet opening (10) with the delivery branch (12) and the return branch (13) of the conditioning system (14);
the detection system (15) is configured for generating a warning signal (24) if the hydraulic connection is verified.

2. The lift truck according to the preceding claim, **characterised in that** the inlet opening (9) and the outlet opening (10) of the heat exchanger (7) are positioned close to the recharging pin (6).

3. The lift truck according to any one of the preceding claims, **characterised in that** the energy storage unit (3) comprises a system (16) for managing the flows of electric current inside the energy storage unit (3); the management system (16) is configured to activate the recharging of the energy storage unit (3).

4. The truck according to the preceding claim, **characterised in that** the management system (16) is configured to activate the circulation of the operating fluid in the heat exchanger (7).

5. The lift truck according to claim 3 or 4, **characterised in that** the management system (16) is configured for regulating the flow of electric current inside the energy storage unit (3) in relation to a temperature value of the operating fluid introduced into the heat exchanger (7).

6. The lift truck according to any one of the preceding claims, **characterised in that** a data processing unit (19) is in communication with one or more recharging units (17) external to the lift truck (1);
display means (20) make available to an operator the information regarding the availability of the recharging units (17)
the data processing unit (19) is configured to send a booking request to the recharging unit (17) available.

7. The system for recharging a lift truck according to any one of claims 1 to 6 having one or more recharging stations (22) each intended for a lift truck (1);
each recharging station (22) comprises:
- a recharging unit (17) configured to be in communication with the management system (16) of the energy storage unit (3) and
- a conditioning system (14) comprising the delivery branch (12) and the return branch (13) of the operating fluid connectable to the inlet opening (9) and to the outlet opening (10) of the heat exchanger (7);
the conditioning system (14) has a control unit (18) configured to activate the introduction of the operating fluid by means of the delivery branch (12) in the heat exchanger (7) of the lift truck (1) and to adjust the temperature of the operating fluid in the delivery branch (12).

8. The system according to the preceding claim, **characterised in that** the control unit (18) is configured to maintain the temperature of the operating fluid in the delivery branch (12) at a preset temperature.

9. The system according to claim 7 or 8, **characterised in that** the recharging unit (17) is configured to activate the recharging of the energy storage unit (3) and to regulate the flows of electric recharging current in relation to respective control signals (23) generated by the management system (16) of the energy storage unit (3).

10. The system according to any one of claims 7 to 9, **characterised in that** the control unit (18) of the conditioning system (14) is configured for adjusting the temperature of the operating fluid in the delivery branch (12) in relation to respective control signals (25) of the recharging unit (17).

11. The system according to any one of claims 7 to 10, **characterised in that** the control unit (18) of the conditioning system (14) is configured to receive the warning signal (24) of the system (15) for detecting the hydraulic connection.

12. The system according to any one of claims 7 to 11, **characterised in that** the recharging unit (17) of a respective charging station (22) is configured to receive a booking request from a lift truck (1) and to send an acceptance or refusal signal on the basis of its occupation and/or on the basis of the flow of electric recharging current requested from the unit of the energy storage unit (3) and the temperature of the operating fluid to be introduced in the heat exchanger (7).
